# EUROPEAN PATENT SPECIFICATION

(11) **EP 4 088 799 B1**
(45) Date of publication and mention of the grant of the patent: **28.01.2026**
(21) Application number: 21305621.1
(22) Date of filing: 12.05.2021
(51) Int. Cl.: B01D 25/26, B01D 25/32

(54) **FILTERING COMPONENT FOR A FILTERING UNIT WITH BACKWASHING**
FILTERKOMPONENTE FÜR EINE FILTRIEREINHEIT MIT RÜCKSPÜLUNG
COMPOSANT DE FILTRATION POUR UNE UNITÉ DE FILTRATION AVEC RETRO-LAVAGE

(43) Date of publication of application: 16.11.2022
(73) Proprietor: Alfa Laval Moatti, 78990 Elancourt (FR)
(72) Inventor: NICOLLE, Adrien, 78990 Elancourt (FR)
(74) Representative: Alfa Laval Attorneys

(56) References cited:
- WO-A1-2012/028824
- GB-A- 915 341
- US-A- 2 631 732

## Description

### TECHNICAL FIELD

The present disclosure relates to a filtering unit with automatic backwashing. More particularly, the disclosure relates to an improvement in the backwashing efficiency of such a filtering unit.

### TECHNOLOGICAL BACKGROUND

International application WO 2012/028824 describes a filtering unit comprising at least two filter components, each filter component having an internal face, an external face, a filtering mesh, two concentric circular edges, respectively an inner edge and an outer edge between which said filtering mesh extends, and radial ribs provided at least on the internal face, said radial ribs extending between said concentric edges and being distributed circumferentially in order to form distinct sectors on said internal face. Said filter components are configured to be assembled against each other so that their respective internal faces face each other so as to define a space between them, wherein said radial ribs delimiting the sectors form circumferential compartments in said space. At least one of said inner edge and outer edge has passages respectively communicating with corresponding ones of the sectors. The filter components are stacked along an axial direction between a first cover and a second cover. Other exemplary filtering units are disclosed in GB 915341 and US 2631732.

By stacking a selected number of filter component pairs, a desired filter area is obtained for an intended application. Typically, the fluid for filtering penetrates into the stack via passages of the inner edge, passes through the filtering mesh, and, once purified, exits via other passages defined in the outer edge. Naturally, the flow of fluid through the filtering mesh could be reversed or arranged in some other way.

The filter described in that publication further comprises a divider arranged coaxially with the filter elements, the divider having distinct distribution columns, and a rotary backwashing distributor provided at the first cover. The rotary backwashing distributor has a shutter provided with a discharge opening and is mounted to rotate so that said discharge opening is periodically and selectively put into communication with each distribution column, whereby each distribution column periodically and selectively establishes communication between the discharge opening and respective ones of the passages.

In this way, periodically, the fluid flow is reversed in the sectors corresponding to passages in fluid communication with the discharge opening, which enables backwashing to be performed in these sectors due to the pressure gradient across the filtering mesh, i.e. the pressure gradient between the external face side and the internal face side. The fluid used for backwashing is then discharged through the discharge opening.

In some applications, typically water-based applications, the pressure gradient may not be sufficient to ensure a high enough backflush flow and therefore a complete backwashing of the filtering mesh. Increasing the overall backflush flow is not desired as it represents a loss of cleaned flow. This loss may be compensated by an increase of the inlet flow, but this would imply oversizing upstream devices such as pumps, heat exchangers and other ancillaries.

Thus, a need has arisen for improving the efficiency of the backwashing. One such need is the requirement for filters used in water-based applications, which generally operate with lower pressures than for other fluids such as oil. Therefore, there is a need for a new type of filtering units, or a new type of a part thereof.

### SUMMARY

In this respect, the present disclosure relates to a filtering component for a filtering unit with backwashing, the filtering component being annular and comprising an inner edge, an outer edge and a filtering medium extending between the inner edge and the outer edge, the filtering component having an internal face and an external face on either side of the filtering medium, wherein, on the internal face, ribs extending between the inner edge and the outer edge are circumferentially distributed to form sectors, wherein the filtering component is adapted to be assembled against a first identical filtering component so that their facing respective internal faces define a space that is circumferentially compartmented by the contacting respective ribs of said internal faces, wherein a first one of the inner edge and the outer edge has passages communicating with each of the sectors on the internal face, and wherein the external face has a key for pairing the filtering component in a given position with respect to a second identical filtering component, the key being arranged such that the passages of the second identical filtering component are offset with respect to the passages of the filtering component.

The filtering medium may extend over part or all of the distance between the inner edge and the outer edge. One side of the filtering medium defines the internal face of the filtering component, while the opposite side of the filtering medium defines the external face of the filtering component. The filtering component may be generally flat.

The first identical filtering component and the second identical filtering components are identical to the disclosed filtering component (also referred to as the "reference" filtering component to avoid ambiguities) at least in terms of the recited features, it being understood that they may differ as regards other features.

The internal face of the reference filtering component is thus configured to be assembled to the internal face of the first identical filtering component. The external face of the reference filtering component is thus configured to be assembled to the external face of the second identical filtering component. Thus, a stack can be obtained with identical filtering components, each filtering component being upside-down with respect to an adjacent filtering component. However, in spite of their ability to be assembled to identical filtering components, the internal and/or external faces of the reference filtering component may also be assembled to different filtering components.

The ribs defined on the internal face enable isolating a sector for backwashing. The external face needs not be compartmented. At least one passage may be provided on the external face, e.g. on a second one of the inner edge and the outer edge, for purified fluid outlet and backflush inlet. Conversely, on the internal face, the second one of the inner edge and the outer edge may be devoid of passages, so that the fluid entering one sector via a passage must cross the filtering medium to exit that sector.

Since the passages, which communicate with each of the sectors on the internal face, are all located on a first one of the inner edge and the outer edge, the direction of the flow to be filtered is the same in all the sectors on the internal face. Therefore, the external face may be simplified. As a result of both considerations, the flow is more homogeneously distributed and pressure losses are decreased. In addition, since the direction of the flow to be filtered is the same in all the sectors on the internal face, the material forming the internal face is regularly distributed during manufacturing of the filtering component, which decreases the likelihood of production defects.

A key is an element providing a keyed connection between the respective external faces of the reference filtering component and of the second identical filtering component. Therefore, the key predetermines the relative position of the second identical filtering component with respect to the reference filtering component, e.g. angularly. The key may include a physical element providing physical cooperation.

The key may be located between the inner edge and the outer edge, in order to reduce the bulk of the filtering component.

The offset may be an offset in the circumferential direction of the annular filtering components.

Thanks to the key being arranged such that the passages of the second identical filtering component are offset with respect to the passages of the filtering component, the passages of adjacent filtering components can be isolated for backwashing successively, and no longer at the same time. Therefore, the number of sectors that are backwashed at the same time is decreased. As a consequence, the specific backflush flow, i.e. the backflush flow per unit surface of the filtering medium, is increased in the backwashed sectors without neither increasing the overall backflush flow, which would require oversizing the filter as explained above, nor increasing the number of sectors, which would decrease the overall filtering surface due to the space occupied by the ribs. Accordingly, the backwashing efficiency is improved.

In some embodiments, the key is configured to prevent assembling the external face to the internal face of the second identical filtering component. For instance, the key may be mechanically incompatible with the internal face of the second identical filtering component. Therefore, proper assembly of the filter, and as a consequence proper positioning of the passages, are ensured.

In some embodiments, the internal face comprises a first indicator and a second indicator for pairing with a corresponding second indicator and a corresponding first indicator of the internal face of the first identical filtering component, respectively, and wherein the key is offset with respect to an axis of a symmetry which transforms the first indicator into the second indicator.

As explained above, the internal face of the reference filtering component is adapted to be assembled against the internal face of the first identical filtering component. The relative position of the reference filtering component and the first identical filtering component is determined by the respective first indicators pairing with the respective second indicators. The first and second indicator may provide a keyed connection.

Because the first indicator of one of the filtering components pairs with the second indicator of the other filtering component, there exists a symmetry which transforms the first indicator into the second indicator, in the same filtering component. This symmetry has an axis, and the key is offset with respect to that axis. Therefore, the key of the reference filtering component is shifted with respect to the key of the first identical filtering component. This induces a progressive offset of the external faces of the filtering components with respect to one another, so that the passages of the successive filtering component are progressively offset too.

In some embodiments, the ribs extend beyond the filtering medium to the external face, a thickness of the ribs on the external face being less than a thickness of the ribs on the internal face. That is, the external face is provided with ribs extending the ribs provided on the internal face. However, a thickness of the ribs on the external face is less than a thickness of the ribs on the internal face. Therefore, the pressure losses on the external face are reduced, while not decreasing the mechanical robustness of the filtering component.

In some embodiments, the key faces at least one of the ribs in a direction across the filtering medium. The key is provided on the external face whereas the ribs are provided on the internal face, but making the key face at least one of the ribs in a direction across the filtering medium maximizes the filtering medium surface available for filtering the fluid flow. Filtering and backwashing efficiencies are thus increased. If applicable, the key may be provided on a rib of the external face.

In some embodiments, the filtering medium comprises a mesh. In some embodiments, the mesh is sloped from one end of the inner edge to the opposite end of the outer edge, which helps increasing the filtering surface and decreasing pressure losses.

The present disclosure is further directed to a filtering element for a filtering unit with backwashing, the filtering element consisting of a filtering component and an identical filtering component as claimed in any one of claims 1 to 5, the filtering element being annular and comprising an inner edge, an outer edge and a filtering medium extending between the inner edge and the outer edge to define a pre-filter chamber, at least the pre-filter chamber being circumferentially compartmented in sectors, at least one of the inner edge and the outer edge having passages communicating with each of the sectors, wherein the filtering element further has a key for pairing the filtering element in a given position with respect to an identical filtering element, the key being arranged such that the passages of the identical filtering element are offset with respect to the passages of the filtering element.

The filtering element may comprise a pair of facing filtering components as described above, e.g. the reference filtering component and the first identical filtering component. In this case, the pre-filter chamber may be defined between the respective internal faces of the facing filtering components. Besides, the identical filtering element may comprise the second identical filtering component. In other embodiments, the filtering element may not be dividable into two filtering components.

Thanks to the key being arranged such that the passages of the identical filtering element are offset with respect to the passages of the filtering element, the backwashing efficiency is improved for the same reasons as those detailed previously.

In some embodiments, the key is outside the pre-filter chamber.

In some embodiments, the key is provided on two opposite sides of the filtering element, at different positions on the two opposite sides. Thus, a filtering element assembled on one side of the reference filtering element may have a different position than the filtering element assembled on the opposite side of the reference filtering element, and/or both may have a different position from the reference filtering element itself. Accordingly, a good distribution of the passages is obtained, which makes the backwashing more efficient.

The present disclosure is further directed to a filtering part for a filtering unit with backwashing, wherein the filtering part is the filtering component as previously described or the filtering element as previously described.

In some embodiments, the key comprises a protrusion and a recess, wherein the protrusion is configured to engage in the recess of an identical filtering part. Therefore, proper positioning is ensured.

If applicable, the protrusion and/or the recess may be blind, in order to avoid creating a channel in which filtered fluid would mix with non-filtered fluid.

In some embodiments, the offset is an offset by a non-integer multiple of a sector. A non-integer multiple is a multiple, either less or greater than 1, which is not an integer: for instance 1/2, 1/3, 3/2, 2.4, etc. An offset by one is an offset that transforms a sector into an adjacent sector, and in particular a passage into an adjacent passage. Thus, due to the offset being an offset by a pitch which is a non-integer multiple of a sector, the offset of the passages is precisely and uniformly controlled.

In some embodiments, the key makes the filtering part non-rotationally symmetrical. That is, there exists no rotation of an angle more than 0° and less than 360° by which the key would be transformed into itself. Therefore, a unique positioning of the successive external faces of the filtering parts is ensured.

The present disclosure is further directed to a filtering assembly for a filtering unit with backwashing, comprising a sleeve and a plurality of filtering parts as claimed in any one of claims 9 to 12 and that are stacked with one another, wherein each filtering
part has a filtering medium and a plurality of passages for conducting fluid to the filtering medium, the passages opening out on compartmented sectors, wherein the filtering parts are keyed with respect to the sleeve so that the passages of one of the filtering parts are offset with respect to the passages of an adjacent one of the filtering parts.

As mentioned before, the filtering parts may be filtering elements or filtering components, and may have some or all of the above-described properties.

The sleeve may be assembled around a stack of the filtering parts, or, when the filtering parts are annular, inside a stack of the filtering parts. The sleeve itself may be annular.

Note that the filtering parts need not be keyed with respect to one another, insofar as they are keyed with respect to a common element, here the sleeve. Hybrid solutions, where some filtering parts are keyed with respect to one another and some filtering parts are keyed to the sleeve, are also envisaged.

Thanks to the filtering parts being keyed with respect to the sleeve so that the passages of one of the filtering parts are offset with respect to the passages of an adjacent one of the filtering parts, the backwashing efficiency is improved for the same reasons as those detailed previously.

In some embodiments, the sleeve has apertures facing the passages, the apertures being offset circumferentially along a longitudinal direction of the sleeve. That is, apertures at one longitudinal position are circumferentially offset from apertures at another longitudinal position. In addition to matching the passages of the filtering parts, offsetting the passages circumferentially along a longitudinal direction mechanically strengthens the sleeve.

Alternatively or in addition, the apertures may be elongated in order to match different positions of the filtering part passages.

The present disclosure is further directed to a filtering unit comprising a plurality of filtering components as previously described, or a plurality of filtering elements as previously described, or a plurality of filtering parts as previously described, or a filtering assembly as previously described. The filtering unit further comprises a rotary backwashing distributor configured to selectively isolate the passages to enable backwashing in the corresponding sectors.

The rotary backwashing distributor may have an opening, said opening being periodically and selectively put into communication with at least one of the passages, e.g. passages which are aligned perpendicularly to a direction of movement of the rotary backwashing distributor.

The present disclosure further relates to a filter comprising a casing and a plurality of filtering elements stacked between a first cover and a second cover, wherein the first cover rests against the casing in a stacking direction of the filtering elements, wherein the filter further comprises a cover backing coupled to the second cover by a return system configured to return the second cover towards the first cover, wherein the cover backing rests against the casing in the stacking direction and the second cover separates a zone of the casing adapted to receive filtered fluid from a zone of the casing adapted to receive fluid to filter.

A filtering element is an element configured to filter fluid when the fluid flows across the filtering element. The filtering element may comprise two filtering components. The filtering element and/or the filtering component may have any of the above-described features.

The first cover and the cover backing rest against the casing in the stacking direction. The first cover and the cover backing may rest against facing portions of the casing, so that the casing prevents the first cover and the cover backing to move away from each other.

The second cover is coupled to the cover backing and returned or biased toward the first cover by a return system. The return system therefore provides a force, e.g. a compressive or tensile force, to maintain the filtering elements, which are stacked between the first cover and the second cover, in sealing contact with one another.

In addition, since the second cover separates a zone of the casing adapted to receive filtered fluid (hereinafter "clean zone" for the sake of conciseness) from a zone of the casing adapted to receive fluid to filter (hereinafter "dirty zone" for the sake of conciseness), the fluid pressure is not the same on either side of the second cover due to the pressure loss of the fluid across the filtering elements. Therefore, the pressure drop across the second cover pushes the second cover towards the clean zone and thus against the filtering elements, thereby complementing the return system in order to ensure proper sealing contact of the filtering elements. Since the pressure drop across the second cover increases with the pressure drop across the filtering elements, the force due to the pressure loss across the filtering elements never exceeds the force due to the pressure difference across the second cover and the return force of the return system. Therefore, the reliability of the filter is improved.

In some embodiments, the cover backing is openwork. That is, the cover backing may comprise one or more internal opening for fluid to flow through. This facilitates the flow of fluid to filter towards the second cover, decreases the pressure loss across the cover backing and therefore increases the pressure on the dirty side of the second cover. Thus, reliability of the filter is further enhanced.

In some embodiments, at least one of the first cover and the second cover includes a gasket. The gasket may be provided at a periphery of the cover. Separation of the different areas is therefore more reliably obtained.

In some embodiments, the return system comprises at least one return assembly, each of the at least one return assembly comprising a spring and a stressing member for applying stress on the spring. The return system may comprise a plurality of return assemblies which are distributed between the cover backing and the second cover to apply a uniform return force. The spring may be any type of spring, e.g. a helical spring, a conical washer, a Belleville washer, a leaf spring, etc. Each assembly may comprise more than one spring. Besides, the stressing member may be any member suitable for applying a stress to the spring. For instance, a nut, a locknut, a pin, etc., are encompassed. Upon action of the stressing member, the spring may be prestressed.

In other embodiments, each return assembly may comprise another return element than a spring, e.g. an elastic element, such as an elastomer, or a magnetic assembly. Without any loss of generality, only the spring will be described hereinafter.

In some embodiments, the spring is mounted between the second cover and the cover backing. The spring may be a compression spring.

In some embodiments, the filter further comprises a sleeve extending from the first cover to the second cover. The sleeve may be concentric to the filtering elements. The sleeve may be the same sleeve as that described above with reference to the filtering parts.

In some embodiments, the sleeve has a keyed connection with at least one of the first cover and the second cover. Therefore, proper orientation of the first cover and/or the second cover can be ensured, which further helps improving reliability.

In some embodiments, the sleeve has a circumferential groove at a side of the second cover opposite the filtering elements. That is, the groove may be located on the dirty side of the second cover. The groove may be located on the same side of the second cover as the cover backing. The groove may assist in assembling of the filter, as will be detailed below.

In some embodiments, at least one of the first cover and the second cover comprises a key for mounting one of the plurality of filtering elements in a given position with respect to said at least one of the first cover and the second cover. Said one of the plurality of filtering elements may be an element adjacent to the first cover or to the second cover. A key is an element providing a keyed connection between the first and/or second cover and one filtering element. Therefore, the key predetermines the relative position of the first and/or second cover with respect to said filtering element, e.g. angularly. Thanks to the key, a predetermined position between the first and/or second cover can be easily respected when assembling the filter.

The present disclosure is further directed to a method for assembling a filter, comprising:
- stacking a plurality of filtering elements between a first cover and a second cover;
- connecting a transmission part to the first cover;
- coupling a cover backing to the second cover via a return system, wherein the return system is configured to return the second cover towards the first cover;
- prestressing the return system and fastening the cover backing to the transmission part;
- mounting the plurality of filtering elements in a casing such that the first cover rests against the casing in a stacking direction of the filtering elements;
- at least partially detaching the cover backing from the transmission part, such that the cover backing rests against the casing in the stacking direction and that the second cover separates a zone of the casing adapted to receive filtered fluid from a zone of the casing adapted to receive fluid to filter.

The transmission part may be any part configured to withstand and transfer a load from the first cover to the cover backing, such load maintaining the filter elements stacked between the first cover and the second cover. Therefore, by connecting the transmission part to the first cover and fastening the cover backing to the transmission part, the connection (resp. fastening) is such that the transmission part counters the load and holds the first cover and the cover backing against the force exerted by the stack of filtering elements, the second cover and the return system.

By prestressing the return system prior to fastening the cover backing to the transmission part, the cover backing may be made closer to the first cover than what it is in the final configuration of the filter. Therefore, the plurality of filtering elements can be mounted, with the first cover, second cover and cover backing, in the casing, such that the first cover rests against the casing in a stacking direction of the filtering elements, and such that the cover backing rests against the casing in a stacking direction after the cover backing has been detached from the transmission part.

At least partially detaching the cover backing means releasing at least one degree of freedom of the cover backing in order to allow it to rest against the casing. In this configuration, the load between the cover backing and the first cover is transmitted through the casing itself and no longer transmitted through the transmission part, which may be removed or left in place, e.g. if it has a functional role for the filter. In other words, after the fastening, the mechanical load between the first cover and the cover backing is transmitted through the transmission part. After the detaching, the mechanical load between the first cover and the cover backing is transmitted through the casing. Therefore, there is no need for oversizing the transmission part, the mechanical role of which may be only temporary.

The filter resulting from the assembling method may be the above-described filter and may have any of the above-described features.

In some embodiments, the transmission part is provided beside the filtering elements. In this context, beside means that the transmission part does not cross a functional surface of a filtering element; however, should the filtering element be annular, the transmission part may be provided radially inside (closer to the axis) or radially outside (further away from the axis) of the filtering element. In these embodiments, the surface of the filtering elements can be dedicated to filtering, which results in increased filtering efficiency. Besides, the transmission part can be more easily removed, if need be.

In some embodiments, the transmission part includes a sleeve of the filter, which is mounted coaxially with the filtering elements. The sleeve may be mounted coaxially inside the filtering elements.

In some embodiments, the fastening the cover backing to the transmission part comprises arranging a stop between the cover backing and the transmission part. The stop may be configured to stop the cover backing in the stacking direction, e.g. to prevent the cover backing from moving away from the first cover in the stacking direction.

In some embodiments, the stop is arranged at a side of the cover backing opposite the second cover. Therefore, the stop is easily accessible and can be easily removed, either partially or totally, in the detaching. Assembling of the filter is therefore simplified.

In some embodiments, a load of the return system is transmitted through a first part of the cover backing when the cover backing is fixed to the transmission part, and through a second part of the cover backing when the cover backing rests against the casing. The first part and the second part of the cover backing may be distinct from each other. The first part may be a part for fastening the cover backing to the transmission part, whereas the second part may be a part configured to rest against the casing. In these embodiments, the first part and the second part may be manipulated separately, which facilitates the assembling.

### BRIEF DESCRIPTION OF THE DRAWINGS

The invention and advantages thereof will be better understood upon reading the detailed description which follows, of embodiments given as non-limiting examples. This description refers to the appended drawings, wherein:
- Fig. 1 is a perspective view of the internal face of a filtering component according to an embodiment.
- Fig. 2 is a perspective view of the external face of the filtering component of Fig. 1.
- Fig. 3 illustrates, in perspective, the stacking of filtering components according to an embodiment.
- Fig. 4 is a transversal cross-section of a filtering unit according to an embodiment, along plane IV-IV in Fig. 6.
- Fig. 5 is a transversal cross-section of a filtering unit according to an embodiment, along plane V-V in Fig. 6.
- Fig. 6 is a longitudinal cross-section of a filter according to an embodiment.
- Fig. 7 is an exploded perspective view of some components of the filter of Fig. 6.
- Fig. 8 is a detailed view of area VIII in Fig. 6.
- Fig. 9 is a diagram illustrating the steps of a method for assembling a filter according to an embodiment.

### DETAILED DESCRIPTION OF EMBODIMENTS

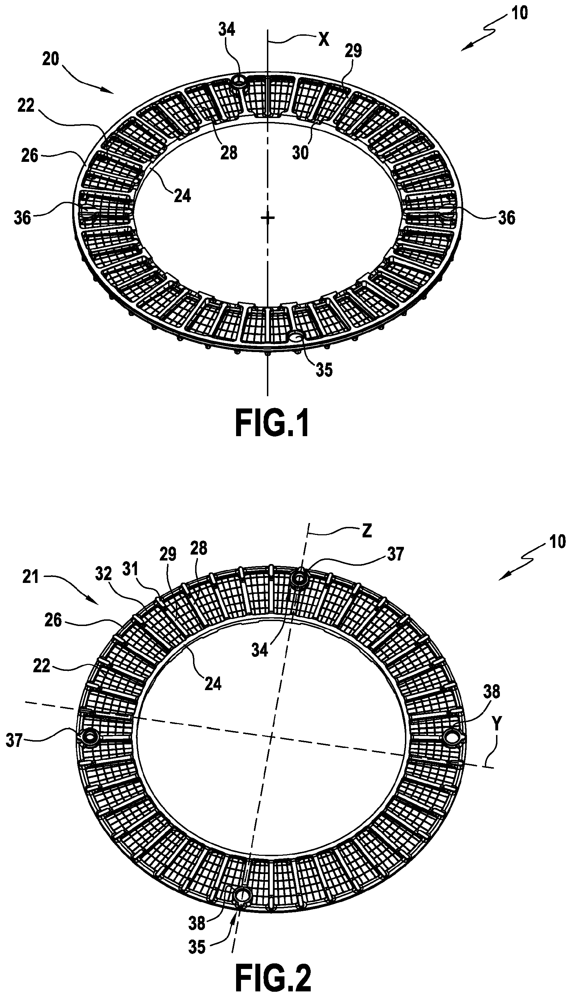

A filtering component 10 according to an embodiment is described with reference to Figs. 1 to 3. In order to properly identify different filtering components from one another when described together, the elements relating to the filtering component 10 (also known as the reference filtering component) will receive a standard reference, elements relating to a first identical filtering component 10' will receive the same reference with addition of ' (prime), and the elements relating to a second identical filtering component 10" will receive the same reference with addition of " (double prime), although they may not be shown or labeled in the drawings *per se.*

The filtering component 10 is annular about a central axis X, defining an axial direction (hereinafter "axial direction X"). A radial direction is a direction perpendicular to the central axis and intersecting the central axis. An axial plane is a plane including the central axis. A radial plane is a plane perpendicular to the central axis. A circumference is a circle included in a radial plane and having its center on the central axis. A tangential or circumferential direction is a direction which is at a tangent to a circumference; it is perpendicular to the central axis but does not intersect the central axis.

Unless otherwise mentioned or understood differently in view of the context, "inner" and "outer" are used in reference to a radial direction, such that an inner element is closer to the central axis X than an outer element.

Here, the filtering component 10 comprises an inner edge 24, an outer edge 26 and a filtering medium 22 extending between the inner edge 24 and the outer edge 26. The inner and outer edges 24, 26 are annular and may be circular about the central axis X. For instance, as shown, the inner and outer edges 24, 26 may be concentric. The inner edge 24 mainly extends in a radial plane. The outer edge 26 mainly extends in a radial plane.

In this embodiment, the diameter of the outer edge 26 is in the range from about 100 mm to about 600 mm.

The filtering medium 22 may be a filtering mesh (hereinafter "mesh 22", without any loss of generality) or any other filtering medium. The mesh 22 defines, on either sides thereof in the axial direction X, an internal face 20, shown in Fig. 1, and an external face 21, shown in Fig. 2, of the filtering component 10. The characteristics of the mesh 22 may be adapted to the fluid to filter and the expected impurities to remove from that fluid.

The filtering component 10 comprises ribs 28 provided at least on the internal face 20. The ribs 28 extend from the inner edge 24 to the outer edge 26. The ribs 28 may extend in the radial direction. The ribs 28 may be rectilinear. The ribs 28 are distributed circumferentially, e.g. regularly, in order to form sectors on said internal face 20, as shown in Fig. 1.

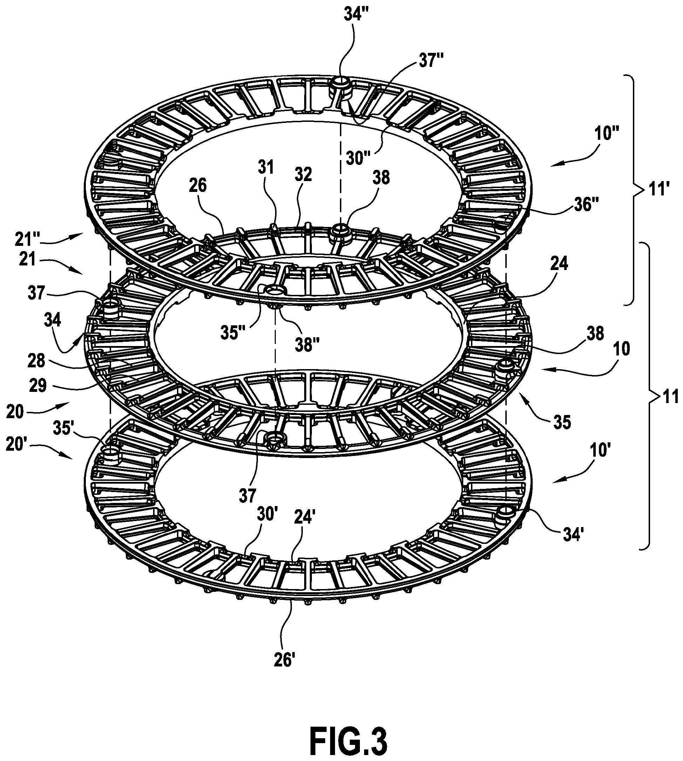

Thus, when the filtering component 10 is assembled against a first identical filtering component 10' (see Fig. 3, where the filtering medium 22 has been omitted for the sake of legibility) so that their respective internal faces 20, 20' face each other, their respective ribs 28, 28' come in contact with one another in order to circumferentially compartment the space defined between said internal faces. This space is also known as a pre-filter chamber.

In the non-limiting example shown, each filtering component 10 is divided into twenty sectors regularly spaced apart circumferentially. Depending in particular on its diametrical size, the filter element can have less or more sectors, due e.g. to mechanical limitations.

Reinforcing ribs 29 may additionally extend between the inner edge 24 and the outer edge 26, as shown in Fig. 1, and/or between ribs 28, and/or between a rib 28 and at least one of the inner edge 24 and the outer edge 26. In this embodiment, a reinforcing rib 29 is provided between two consecutive ribs 28. The reinforcing rib 29 may extend in the radial direction, as shown, in order to facilitate manufacturing. However, other directions (e.g. circumferential, inclined, etc.) are envisaged.

On the internal face, the reinforcing ribs 29 may not extend axially as far as the ribs 28, i.e. may be at least partially recessed as compared to the ribs 28, so that the reinforcing ribs 29 do not form a separation between sectors. In other words, a distal surface of the reinforcing rib 29 may be closer to the mesh 22 than a distal surface of the rib 28. However, other configurations are possible to ensure that the reinforcing ribs 29 do not further delimit sectors.

When the filtering component 10 is assembled against a first identical filtering component 10' (see Fig. 3) so that their respective internal faces 20, 20' face each other, their respective reinforcing ribs 29, 29' may face each other in a direction perpendicular to the filtering mesh (e.g. axially or substantially axially), in order to facilitate the flow of filtered fluid and thus decrease pressure losses.

As mentioned before, a first one of the inner edge 24 and the outer edge 26, here the inner edge 24, has passages 30 respectively communicating with corresponding ones of the sectors on the internal face 20. The passages 30 may be provided as notches or cutouts in the inner edge 24. The passages 30 may be provided between consecutive radial ribs 28.

On the other hand, the other edge, here the outer edge 26, may be devoid of passages on the internal face 20, e.g. such that when the filtering component 10 is assembled against a first identical filtering component 10' (see Fig. 3) so that their respective internal faces 20, 20' face each other, their respective outer edges 26, 26' come in sealing contact with one another in order to prevent flow from the space defined between said internal faces (the pre-filter chamber) through the outer edges 26.

Figure 2 shows the external face 21 of the filtering component 10 of Fig. 1. As illustrated in Fig. 2, on the external face 21, the outer edge 26 has passages 32. The passages 32 may be provided as notches or cutouts in the outer edge 26. The passages 32 may be provided between consecutive radial ribs 28.

The radial ribs 28 on the internal face 20 and on the external face 21 face one another on opposite sides of the mesh 22. In other words, the ribs 28 on the internal face 20 and on the external face 21 are in axial correspondence with one another. In yet other words, the ribs 28 extend from the internal face 20, beyond the filtering medium and to the external face 26.

On the external face 21, at least some of the ribs 28 and the reinforcing ribs 29 may have a protruding portion 31, which may protrude axially from the said ribs. The protruding portions 31 separate passages 32 of the external face 26 from one another. The protruding portions 31 may extend from the outer edge 26 and/or the corresponding rib 28 or reinforcing rib 29. As a consequence of the protruding portions 31, the ribs 28 may not delimit sectors on the external face 21. Besides, a thickness of the ribs 28 on the external face 21 is less than a thickness of the ribs 28 on the internal face 20 in order to decrease pressure losses on the external face 21.

The filter components 10 may be manufactured by molding around the mesh 22. In other words, the filter components 10 may be manufactured by injection molding or the like, wherein the mesh 22 forms an insert in the mold. The molded portions may be made of metal (e.g. an aluminum alloy) or of plastics material, especially polymers. The ribs 28, the reinforcing ribs 29 and the inner and outer edges 24, 26 may be coated in an elastomer in order to avoid leaks between filter components 10.

In operation, a fluid to be filtered, e.g. a liquid such as oil or water, can enter through a passage 30 of the inner edge 24 of a filter element 10, cross the filtering mesh 22 to pass from the internal face 20 to the external face 21, whereby the liquid is filtered, and flow out of the filter element 10 through a passage 32 of the outer edge 26. The opposite flow direction is possible as well.

In order to increase the available filtering surface, a plurality of filter components 10 can be stacked. As mentioned before, the filtering components 10 are assembled one against the other such that an internal face 20 faces the internal face 20' of the neighboring filtering component (e.g. a first identical filtering component 10') and that the external face 21 faces the external face 21" of the neighboring filtering component (e.g. a second identical filtering component 10").

As shown in Fig. 1, the internal face 20 comprises a first indicator 34 and a second indicator 35 for pairing with a corresponding second indicator 35' and a corresponding first indicator 34' of the internal face of the first identical filtering component 10', respectively. In this embodiment, the first indicator 34 comprises a protrusion, e.g. a male bushing or a boss. In this embodiment, the second indicator 35 comprises a recess, e.g. a female bushing. The shapes of the first indicator 34 and the second indicator 35 are complementary. The first indicator 34 and the second indicator 35 may be provided such that the filtering component 10 and the first identical filtering component 10' can be assembled in a single relative position, as illustrated in Fig. 3. The first indicator 34 and the second indicator 35 may be diametrically opposed.

Besides, the external face 21 has a key 36 for pairing the filtering component in a given (and possibly unique) position with respect to a second identical filtering component 10". The key 36 may comprise a protrusion 37 (e.g. a male bushing or boss) and a recess 38 (e.g. a female bushing). There may be a plurality of protrusions 37 and/or recesses 38, as illustrated in Fig. 2; only one will be described for the sake of conciseness. The protrusion 37 is configured to engage in the recess 38" of the second identical filtering component 10". Likewise, the recess 38 is configured to receive the protrusion 37" of the second identical filtering component 10", as shown in Fig. 3. The protrusion 37 and the recess 38 may be diametrically opposed.

In order to prevent misassembling of the filter components with one another, the key 36 may be configured to prevent assembling the external face 21 to the internal face 21" of the second identical filtering component 10". In this embodiment, for instance, although the first and second indicators 34, 35 on the internal face 20 have shapes similar to the key on the external face 21, their sizes is such that they cannot cooperate with each other. For instance, the protrusion of the first indicator 34 may not fit into the recess 38 of the key 36.

As previously mentioned, the key 36 is arranged such that the passages 30" of the second identical filtering component 10" are offset with respect to the passages 30 of the filtering component 10. Specifically, as shown in Fig. 2, the key 36 is offset with respect to an axis Y of a symmetry which transforms the first indicator 34 into the second indicator 35. Therefore, when the second identical filtering component 10" is turned upside down to be assembled to the external face 21 of the reference filtering component 10, the second identical filtering component 10" must be rotated for the key 36 of the filtering component 10 to match the key 36" of the second identical filtering component 10".

Thus, the offset may be an angular offset in the circumferential direction. The offset may be an offset by a non-integer multiple of a sector. In the illustrated embodiment, the offset is an offset by half a sector. Therefore, the passages 30 are circumferentially shifted by half a sector from one filtering component to another.

As schematically illustrated in Fig. 2, where axis Z is perpendicular to the central axis X and to the axis of symmetry Y, the key 36 makes the filtering component 10 non rotationally symmetrical. Thus, the given position for pairing with the second identical filtering element 10" is unique.

In order to save effective filtering surface, the key 36 may face at least one of the ribs, including the ribs 28 or the reinforcing ribs 29, in a direction across the filtering medium 22, here the axial direction X. Likewise but independently, the first indicator 34 and/or the second indicator 35 may face at least one of the ribs 28 or the reinforcing ribs 29 in a direction across the filtering medium 22.

Optionally, and as illustrated (see Fig. 1), the first indicator 34 and/or the second indicator 35 may face the key 36 in a direction across the filtering medium 22.

The bushings forming part or all of the first indicator 34, the second indicator 35 or the key 36 may be blinded, for instance as illustrated in Fig. 1 for the key 36, in order to avoid leakage. Indeed, since the bushings may not face one another along the whole stack of filtering components 10, due to the offset, sealing cannot be ensured only by making adjacent bushings engage one another over the whole stack.

Assembling the filtering component 10 with the first identical filtering component 10' makes a filtering element 11; in this case, each filtering component 10 corresponds to a so-called half-filtering element. Yet, in general, filtering elements 11 could be formed differently, e.g. as an integral part or as an assembly of non-identical parts.

The above-described properties may apply as well to a filtering element for a filtering unit with backwashing, the filtering element being annular and comprising an inner edge (instead of the combination of the respective inner edges 24, 24'), an outer edge (instead of the combination of the respective outer edges 26, 26') and a filtering medium extending between the inner edge and the outer edge to define a pre-filter chamber (instead of the space between the facing internal faces 20, 20'), at least the pre-filter chamber being circumferentially compartmented in sectors (possibly by separations other than the contacting respective ribs 28, 28'), at least one of the inner edge and the outer edge having passages communicating with each of the sectors, wherein the filtering element further has a key (possibly similar to the key 36) for pairing the filtering element in a given position with respect to an identical filtering element, the key being arranged such that the passages of the identical filtering element are offset with respect to the passages of the filtering element.

The key may be outside the pre-filter chamber, in order to facilitate assembling a filtering element 11 with a neighboring (possibly identical) filtering element 11'. In the above-described embodiment, the external face 21 is outside the pre-filter chamber which is defined between the facing internal faces 20, 20'.

Besides, the key is provided on two opposite sides of the filtering element, at different positions on the two opposite sides. The different positions may be circumferentially offset with respect to each other, in order to induce a circumferential offset of the other filtering elements that will be assembled to said filtering element. When the filtering element comprises two filtering components, e.g. as above-described, the different positions may be due to the respective external faces facing away from each other.

Everything described in the present disclosure about a filtering component applies *mutatis mutandis* to a filtering element. The expression "filtering part" stands for a filtering component and/or a filtering element, as the case may be.

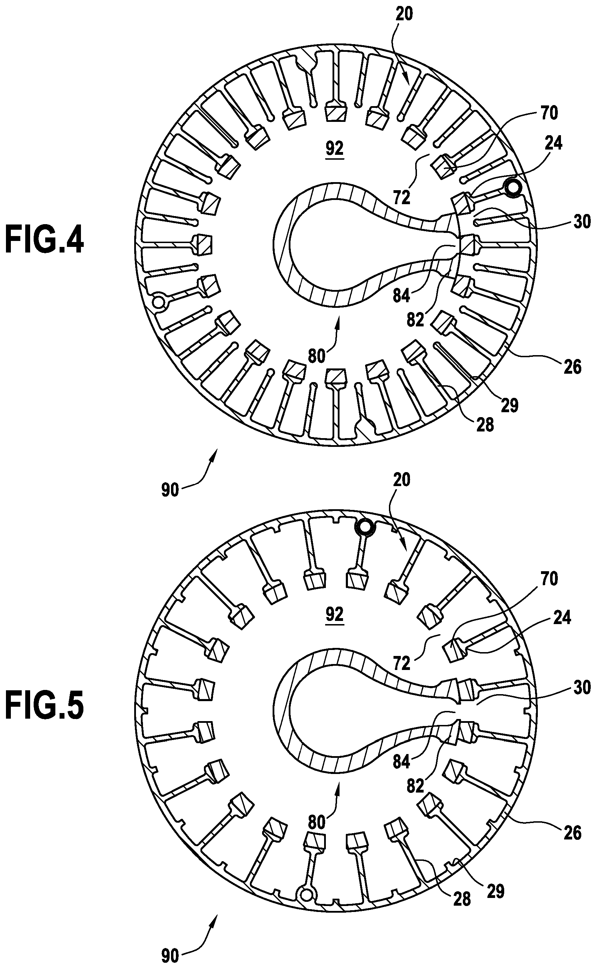

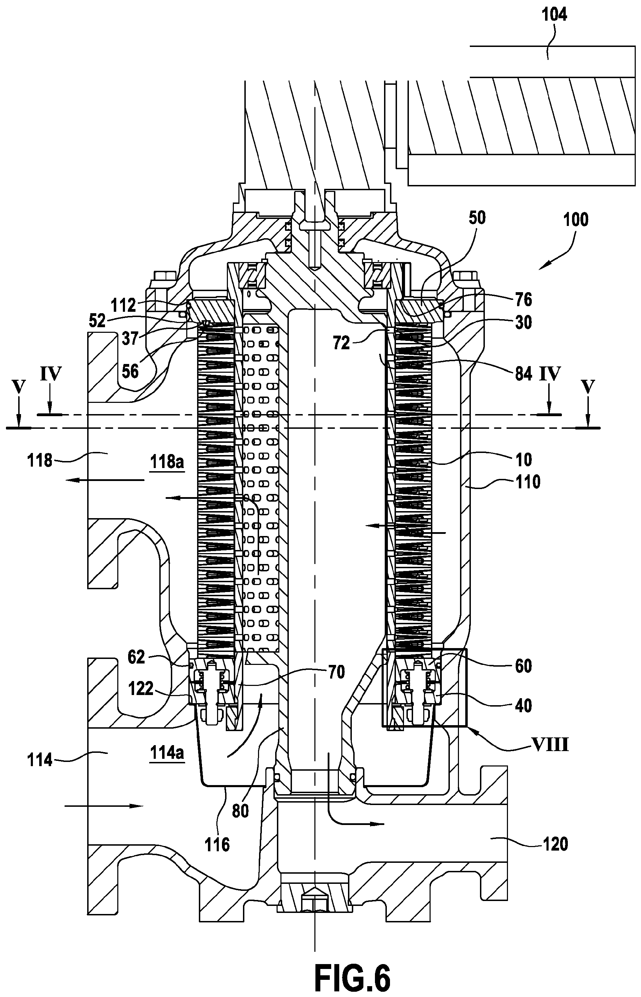

Figures 4 and 5 illustrate the principle of backwashing the filtering component 10. To this end, Figure 4 illustrates a filtering unit 90, comprising a sleeve 70 and a plurality of filtering parts stacked with one another, although only one filtering component 10 is visible due to the cross-sectional representation. The sleeve 70 is arranged concentrically with the filtering component 10, here beside (e.g. radially inside) the filtering component 10. The sleeve 70 has a sealing contact with the filtering component 10. The sleeve 70 has apertures 72 facing the passages 30 of the filtering component 10. Therefore, the apertures 72 are offset circumferentially along a longitudinal direction of the sleeve, here along the axial direction X, as shown in Fig. 6.

In order to avoid pressure losses, the apertures 72 may have about the same size as the passages 30 (with a difference of e.g. 10% or less). Thus, the sleeve is not mechanically weakened. In other embodiments, in order to facilitate manufacturing of the sleeve, the apertures 72 may be circular, e.g. with a diameter of the circle being a greatest dimension of the corresponding passage 30.

The filtering unit 90 further comprises a rotary backwashing distributor 80 configured to selectively isolate the passages 30 to enable backwashing in the corresponding sectors. In this embodiment, the distributor 80 is mounted in a central conduit 92, formed inside the sleeve 70 and through which fluid to filter is supplied to the passages 30.

For instance, in this embodiment, the distributor 80 has a shutter 82 provided with a discharge opening 84 and is mounted to rotate, e.g. about the central axis X, so that said discharge opening 84 is periodically and selectively put into communication with each one of the passages 30.

As best shown in Fig. 6, the discharge opening 84 may extend, continuously or not, longitudinally over a plurality of filtering parts so that all the passages 30 which are in radial correspondence with the discharge opening 84, e.g. all the passages which are aligned, are put into communication with the discharge opening 84 at the same time. For instance, the opening 84 may be rectilinear. The opening 84 may extend parallel to the central axis X.

Figures 4 and 5 show that the shutter 82 is large enough to ensure that a passage 30 is not simultaneously put in communication with the discharge opening 84 and with the central conduit 92.

Although the illustrated embodiment has a unique discharge opening 84, a plurality of discharge openings 84 may be provided. The discharge openings may be circumferentially distributed, such that the frequency of backwashing a given sector is increased without increasing the speed of the backwashing distributor 80. The plurality of discharge openings 84 may be such that when one sector is fully backwashed through one of the discharge openings 84, the other discharge openings 84 do not face any passages; otherwise, the backflush specific flow would be reduced.

Thanks to offset of the passages 30 in adjacent filtering parts, the number of passages 30 that are put at the same time in communication with the discharge opening 84 is reduced. Therefore, the backflush flow is divided between fewer sectors, and the specific backflush flow is increased.

Indeed, Fig. 5, which is a view similar to Fig. 4 but relating to another filtering component, here an adjacent filtering component, shows that while the discharge opening 84 is not in contact with any passage 30 in the plane of Fig. 4, the discharge opening 84 communicates with a passage 30 in the plane of Fig. 5. Upon rotation of the backwashing distributor 80, the shutter will shut the passage 30 of Fig. 5 while the discharge opening 84 will come into contact with a passage 30 of Fig. 4. This configuration achieves a filter with continuous backwashing, i.e. wherein at least one sector is backwashed for every position of the backwashing distributor 80. Continuous backwashing may be obtained in other ways, e.g. with a plurality of discharge openings 84. Conversely, with an appropriate sizing of the discharge opening 84, the filter may achieve discontinuous backwashing, i.e. there would exist positions of the backwashing distributor 80 in which no sector is backwashed.

Besides, other types of backwashing distributors are encompassed, e.g. a backwashing distributor having fixed columns communicating with respective ones of the passages 30.

Note that in addition to or instead of being keyed with respect to one another, the filtering parts could be keyed with respect to the sleeve 70 so that the passages of one of the filtering parts are offset with respect to the passages of an adjacent one of the filtering parts. Any type of keyed connection, including those detailed above, is encompassed.

In the previously mentioned international application WO 2012/028824, the filtering parts were maintained together by means of rods extending through the whole stack of filtering parts. Now, in view of the progressive offset of the filtering parts with respect to one another, providing the necessary features to enable the insertion of rods through the whole stack of filtering parts would add unnecessary complexity. Instead, another assembling system is proposed.

Figure 6 shows a filter 100 comprising a casing 110 and a stack of filtering parts, such as the above-described filtering elements, each filtering element comprising a pair of filtering components 10. The filtering elements are stacked axially between a first cover 50 and a second cover 60.

The first cover 50 rests against the casing 110 in a stacking direction of the filtering elements, here in the direction of the central axis X. Specifically, the first cover 50 may rest against a shoulder 112 of the casing 110, the shoulder 112 forming a stop against axial and optionally radial movements of the cover first 50.

The first cover 50 may be a generally annular part. The first cover 50 may have a central opening for insertion of the sleeve 70, as shown in Fig. 6. The first cover 50 may extend radially from the sleeve 70 and outwards at least to the outer edge 26 of the filtering components 10. The first cover 50 and the sleeve 70 may be in sealing contact with each other, e.g. due to tight clearance between them. If needed, a gasket may be provided.

The first cover 50 may include a gasket 52. In this embodiment, an annular gasket 52 is received in a peripheral groove of the first cover 50, the gasket 52 being then compressed between the casing 110 and the first cover 50.

Likewise but independently, the second cover 60 may be a generally annular part. The second cover 60 may have a central opening for insertion of the sleeve 70, as shown in Fig. 6. The second cover 60 may extend radially from the sleeve 70 and outwards at least to the outer edge 26 of the filtering components 10. The second cover 60 and the sleeve 70 may be in sealing contact with each other, e.g. due to tight clearance between them. Sealing is however not required because both the sleeve 70 and the second cover 60 are in the dirty zone.

Thus, the sleeve 70 extends at least from the first cover 50 to the second cover 60.

The second cover 60 may include a gasket 62. In this embodiment, an annular gasket 62 is received in a peripheral groove of the second cover 60, the gasket 62 being then compressed between the casing 110 and the second cover 60.

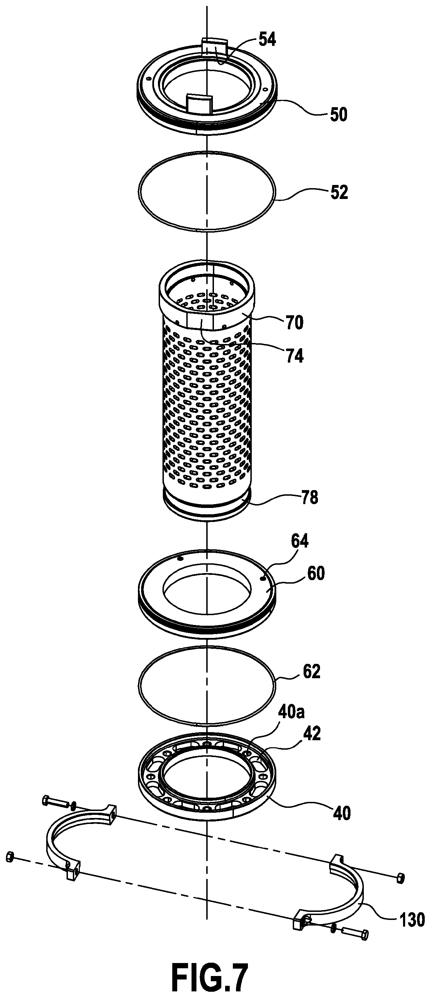

In order to ensure proper alignment of the apertures 72 of the sleeve 70 and the passages 30 of the filtering elements, the sleeve 70 may have a keyed connection with at least one of the first cover 50 and the second cover 60. For instance, as shown in Fig. 7, the first cover 50 may comprise at least one flat face 54 (here, two regularly spaced flat faces) configured to match corresponding flat faces 74 provided on the otherwise circular surface of the sleeve 70. Although not provided in this embodiment, the same type of connection or another keyed connection may be provided between the sleeve 70 and the second cover 60. For instance, instead of having discrete flat faces 74, the sleeve 70 may have a locally polygonal cross-section.

Besides, at least one of the first cover 50 and the second cover 60 may comprise a key for mounting one of the plurality of filtering elements in a given position with respect to said at least one of the first cover 50 and the second cover 60. In this embodiment, Fig. 7 illustrates that the second cover 60 comprises a key 64. The key 64 may comprise a recess configured to engage the key 36, and in particular the protrusion 37, of a filtering element. Figure 6 shows that the first cover 50, similarly but independently, comprises a key 56. The key 56 may comprise a recess configured to engage the key 36, and in particular the protrusion 37, of a filtering element. Therefore, the filter 100 presents a keyed connection between the sleeve 70 and the filtering elements, here through at least one of the first cover 50 and the second cover 60, e.g. the first cover 50. For ease of manufacturing, the keys 56, 64 of the first and second covers may match the key 36 of the filtering elements without being identical thereto.

As shown schematically by arrows in Fig. 6, the fluid to filter enters the filters through an inlet 114 of the casing 110, passes through a strainer 116, and penetrates into the central conduit 92 and into the apertures 72 of the sleeve 70 that are not isolated by the backwashing distributor 80. After filtering through the filtering parts, the filtered fluid is delivered to the outside of the filtering parts and is extracted at an outlet 118 of the casing 110. At the same time, the backwashing distributor 80 is driven to rotate, e.g. by a motor 104. The backwashing fluid is discharged from the discharged opening 84 and led to a discharge outlet 120 for the backwash fluid. If desired, the backwashing fluid may itself be purified through another similar filtering unit.

Thus, in the casing 110, the second cover 60 separates a zone 118a of the casing 110 adapted to receive filtered fluid from a zone 114a of the casing adapted to receive fluid to filter. Thus, the pressure drop of the fluid between the so-called dirty zone 114a and the so-called clean zone 118a helps biasing the second cover 60 towards the first cover 50 and thus maintaining the filtering components 10 in sealing contact with one another.

Besides, as mentioned before, the filter 100 further comprises a cover backing 40. The cover backing 40 is coupled to the second cover 60 by a return system configured to return the second cover 60 towards the first cover 50. As shown in Fig. 6, the cover backing 40 rests against the casing 110 in the stacking direction. Specifically, the cover backing 40 may rest against a shoulder 122 of the casing 110, the shoulder 122 forming a stop against axial and optionally radial movements of the cover backing 40. The shoulder 122 may have a continuous annular shape or may be provided as a plurality of discrete supports.

The cover backing 40 may be a generally annular part. The cover backing 40 may have a central opening for insertion of the sleeve 70, as shown in Fig. 6. The cover backing 40 may extend radially from the sleeve 70 and outwards at least to the outer edge 26 of the filtering components 10.

As illustrated in Fig. 7, the cover backing 40 is openwork. That is, the cover backing 40 has through openings 42 enabling fluid to pass through, which helps maximizing the pressure difference across the second cover 60. The openings 42 may be angularly distributed along the circumference of the cover backing 40.

A method for assembling the filter 100 is now described with reference to Figs. 6 to 9.

As described above, the method comprises a step S1 of stacking a plurality of filtering elements between the first cover 50 and the second cover 60. The filtering elements may include each a pair of filtering components 10, and the connection between adjacent filtering elements and/or components may be keyed as detailed above. The first cover 50 and/or the second cover 60 may each face the external face 21 of the filtering component 10 that is the closest thereto.

Then, in a step S2, a transmission part is connected to the first cover 50. In this embodiment, the transmission part is the sleeve 70. In this embodiment, the transmission part is provided beside the filtering elements, here radially inside and coaxially. However, other arrangements are possible, e.g. radially outside the filtering elements.

The sleeve 70, or more generally the transmission part, may cooperate with the first cover 50 so that the relative displacement of the first cover 50 with respect to the sleeve 70 is prevented at least partially. In this embodiment, as shown in Fig. 6, a shoulder 76 of the sleeve 70 acts as a stop for the first cover 50. Besides, as detailed above, the flat faces 74 limit turning of the first cover 50 with respect to the sleeve 70. Therefore, the sleeve 70 is connected radially and axially to the first cover 50.

Note that step S2 may also be carried out before or simultaneously with step S1. Thus, the transmission part, such as the sleeve 70, may serve as a guide to stack the filtering elements onto the first cover 50.

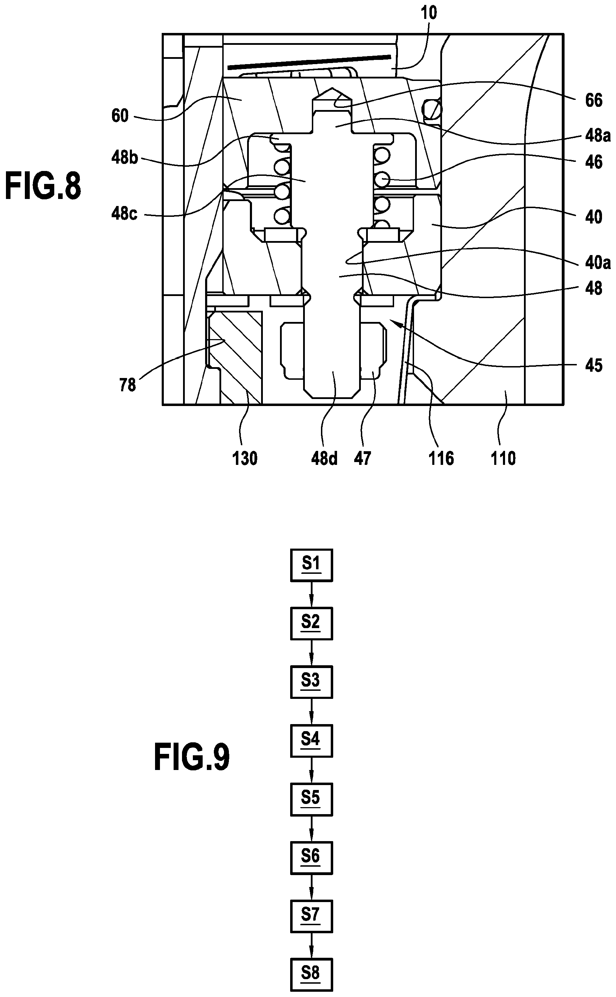

Then, in a step S3, the cover backing 40 is coupled to the second cover 60 via a return system 44. The return system 44 comprises at least one, here a plurality of return assemblies 45, one of which is shown in more detail in Fig. 8. The return system 44 is configured to return the second cover 60 towards the first cover 50. In this embodiment, a return assembly 45 is provided between each two consecutive openings 42.

Note that the openings 42 may extend over more than half of the surface of the cover backing 40 between two consecutive return assemblies 45 (e.g. between two consecutive holes 40a, see below and Fig. 7). The openings 42 being relatively large enables to avoid accumulation of pollution on the cover backing 40.

In this embodiment, the return assembly 45 comprises a spring 46 (here a helical compression spring, but other springs are encompassed) and a stressing member 47 such as a locknut (hereinafter "locknut 47"). The return assembly 45 may further comprise a pin 48.

The pin 48 has a pin head 48a cooperating with a corresponding engagement portion 66, e.g. a recess, of the second cover 60. Optionally, in order for load to be distributed over a larger part than the sole pin head 48a, a flange 48b is provided underneath the pin head 48a for resting against the second cover 60.

The pin 48 comprises a pin main body 48c which extends from the flange 48b, opposite the pin head 48a. The pin main body 48c may be inserted in a hole 40a of the cover backing 40. The pin main body 48c may have a non-circular cross-section at the hole 40a in order to avoid rotation of the pin 48 with respect to the cover backing 40.

At the end of the pin main body 48c opposite the flange 48b, the pin 48 may have a locking portion 48d configured to cooperate with the stressing member 47. Here, the locking portion 48d includes a threaded portion for cooperating with the locknut 47. However, other embodiments are encompassed, such as an auxiliary pin configured to be inserted in a transversal hole of the pin 48.

When coupling the cover backing 40 to the second cover 60, the pin head 48a may be inserted into the engagement portion 66 in order to avoid rotation between the cover backing 40 and the second cover 60. The spring 46 is mounted around the pin 48, specifically around the pin main body 48c, one end of the spring 46 resting against the flange 48b. The cover backing 40 is mounted against the other end of the spring 46, and the locknut 47 is threaded onto the locking portion 48d. The locknut 47 may be threaded until the spring 46 is as compressed as possible. As illustrated, the maximum level of compression may be determined by an enlarged portion of the pin main body 48c, against which the cover backing 40 would rest when the locknut 47 cannot be further threaded.

Therefore, the stressing member - the locknut 47 - applies stress on the spring 46. In doing so, preferably for each of the return assemblies, the return system 45 is prestressed (step S4).

Note that the cover backing 40 and the return system 45 may be provided pre-assembled with each other, as a sub-assembly. Likewise, the cover backing 40 may be pre-coupled to the second cover 60; thus, steps S3 and/or S4 may be carried out before the other steps.

At step S5, the cover backing 40 is fastened to the transmission part, i.e. the sleeve 70. Specifically, step S5 may comprise arranging a stop 130 between the cover backing 40 and the transmission part 70. The stop 130 may be provided as a collar, comprising e.g. two halves configured to be fixed to each other, e.g. by bolts. The stop 130 is configured to be arranged in a corresponding groove 78 of the sleeve, as shown in Figs. 6 and 7. The groove 78 may be provided at a side of the second cover 40 opposite the filtering elements. Moreover, the groove 78 may be located at a position of the sleeve beyond the cover backing 40, such that the stop 130, when mounted in the groove 78, is arranged at a side of the cover backing 40 opposite the second cover 60.

The stop 130 is configured to limit the stroke of the cover backing 40 in the axial direction X, in a direction away from the first cover 50 and the second cover 60.

In another embodiment, the stop 130 may be provided as an elastic collar, possibly a split collar. In yet another embodiment, the stop 130 may be provided as one or more screws or pins inserted transversally in the sleeve 70 and in the cover backing 40. The screws or pins may be inserted from inside the sleeve 70, to facilitate their removal once the filtering unit 90 has been mounted in the casing 110. In these embodiments, the groove 78 is unnecessary. The cover backing 40 may have a thickened portion for insertion of the screws or pins. In order to reduce pressure losses, the thickened portion may taper towards the openings 42.

At step S6, optionally, the locknuts 47 are untightened so that, due to the resulting expansion of the springs 46, the cover-backing 40 is biased against the stop 130 while the second cover 60 is biased against the filtering elements. In doing so, it is avoided that the pin head 48a gets out of the engagement portion 66 if the stack of filtering elements is turned upside down, or otherwise manipulated in view of mounting it into the casing 110. Of course, if the clearance necessary for the pin head 48a to get out of the engagement portion is greater than the clearance between the cover-backing 40 and the stop 130, step S6 is unnecessary.

As can be seen in Fig. 6, the locknuts 47 are provided in the dirty zone 114a, so that even if they are separated from the pins 48, they will not interfere with the purified fluid.

In this state, the load maintaining the filtering elements together is transferred from the first cover 50 to the second cover 60 via the sleeve 70, the stop 130, the cover backing 40 and the return system 45. Note that, as shown in Fig. 9, the load provided by the return system 45 is transmitted through a first part of the cover backing 40, namely a radially inner part of the cover backing 40.

At step S7, the plurality of filtering elements, together with the cover backing 40, the first cover 50, the second cover 60, the sleeve 70 and the stop 130, is mounted in the casing 110 such that the first cover 50 rests against the casing 110 (e.g. the shoulder 112 as described above) in a stacking direction of the filtering elements, i.e. in the axial direction X.

Then, at step S8, the cover backing 40 is at least partially detached from the transmission part, i.e. the sleeve 70. This may be done by removing the stop 130. In doing so, under the effect of the return system 45, the cover backing is further biased away from the second cover 60, until the cover backing 40 rests against the casing 110 in the stacking direction, as described above.

In this configuration, as shown in Fig. 6, the second cover 60 separates the clean zone 118a from the dirty zone 114a.

In addition, because of the removal of the stop 130, no load is transmitted through the transmission part anymore. Instead, the load maintaining the filtering elements together is transferred from the first cover 50 to the second cover 60 via the casing 110, the shoulder 122, the cover backing 40 and the return system 45. Note that, as shown in Fig. 6, the load provided by the return system 45 is transmitted through a second part of the cover backing 40, namely a radially outer part of the cover backing 40.

Although the present disclosure refers to specific exemplary embodiments, modifications may be provided to these examples without departing from the general scope of the invention as defined by the claims. For instance, the steps of the above-described method may be carried out in any technically realistic order. Besides, a cover backing as described may be used with other types of filtering parts, e.g. conventional filtering parts. Conversely, the filtering parts described herein may be assembled with conventional means instead of the cover backing, e.g. with stack-long rods inserted in bushings provided radially outside the outer edge. More generally, individual characteristics of the different illustrated/mentioned embodiments may be combined in additional embodiments. Therefore, the description and the drawings should be considered in an illustrative rather than in a restrictive sense.

## Claims

1. A filtering component (10) for a filtering unit (90) with backwashing, the filtering component (10) being annular and comprising an inner edge (24), an outer edge (26) and a filtering medium (22) extending between the inner edge (24) and the outer edge (26), the filtering component (10) having an internal face (20) and an external face (21) on either side of the filtering medium (22), wherein, on the internal face (20), ribs (28) extending between the inner edge (24) and the outer edge (26) are circumferentially distributed to form sectors, **characterized in that** the filtering component (10) is adapted to be assembled against a first identical filtering component (10') so that their facing respective internal faces (20, 20') define a space that is circumferentially compartmented by the contacting respective ribs (28, 28') of said internal faces, wherein a first one of the inner edge (24) and the outer edge (26) has passages (30) communicating with each of the sectors on the internal face (20), and wherein the external face (21) has a key (36) for pairing the filtering component (10) in a given position with respect to a second identical filtering component (10"), the key (36) being arranged such that the passages (30") of the second identical filtering component (10") are offset with respect to the passages (30) of the filtering component (10).

2. The filtering component as claimed in claim 1, wherein the key (36) is configured to prevent assembling the external face (21) to the internal face (20") of the second identical filtering component (10").

3. The filtering component as claimed in claim 1 or 2, wherein the internal face (20) comprises a first indicator (34) and a second indicator (35) for pairing with a corresponding second indicator (35') and a corresponding first indicator (34') of the internal face (20') of the first identical filtering component (10'), respectively, and wherein the key (36) is offset with respect to an axis of a symmetry (Y) which transforms the first indicator (34) into the second indicator (35) .

4. The filtering component as claimed in any one of claims 1 to 3, wherein the ribs (28) extend beyond the filtering medium (22) to the external face (21), a thickness of the ribs (28) on the external face (21) being less than a thickness of the ribs (28) on the internal face (20).

5. The filtering component as claimed in any one of claims 1 to 4, wherein the key (36) faces at least one of the ribs (28, 29) in a direction across the filtering medium.

6. A filtering element (11) for a filtering unit (90) with backwashing, the filtering element (11) consisting of a filtering component (10) and an identical filtering component (10') as claimed in any one of claims 1 to 5, wherein the filtering element (11) being annular and comprising an inner edge (24, 24'), an outer edge (26, 26') and a filtering medium (22, 22') extending between the inner edge (24, 24') and the outer edge (26, 26') to define a pre-filter chamber, **characterized in that** at least the pre-filter chamber being circumferentially compartmented in sectors, at least one of the inner edge (24, 24') and the outer edge (26, 26') having passages (30) communicating with each of the sectors, wherein the filtering element (11) further has a key (36) for pairing the filtering element (11) in a given position with respect to an identical filtering element (11'), the key (36) being arranged such that the passages (30) of the identical filtering element are offset with respect to the passages (30") of the filtering element (11').

7. The filtering element as claimed in claim 6, wherein the key (36) is outside the pre-filter chamber.

8. The filtering element as claimed in claim 6 or 7, wherein the key (36) is provided on two opposite sides of the filtering element (11), at different positions on the two opposite sides.

9. A filtering part for a filtering unit with backwashing, wherein the filtering part is the filtering component (10) as claimed in any one of claims 1 to 5 and 8 or the filtering element (11') as claimed in any one of claims 6 to 8.

10. The filtering part as claimed in claim 9, wherein the key (36) comprises a protrusion (37) and a recess (38), wherein the protrusion (37) is configured to engage in the recess (38") of an identical filtering part.

11. The filtering part as claimed in claim 9 or 10, wherein the offset is an offset by a non-integer multiple of a sector.

12. The filtering part as claimed in any one of claims 9 to 11, wherein the key (36) makes the filtering part non rotationally symmetrical.

13. A filtering assembly for a filtering unit with backwashing, comprising a sleeve (70) and a plurality of filtering parts (10, 11) as claimed in any one of claims 9 to 12 and that are stacked with one another, wherein each filtering part (10, 11) has a filtering medium (22) and a plurality of passages (30) for conducting fluid to the filtering medium (22), the passages (30) opening out on compartmented sectors, wherein the filtering parts (10, 11) are keyed with respect to the sleeve (70) so that the passages (30) of one of the filtering parts are offset with respect to the passages (30) of an adjacent one of the filtering parts, **characterized in that** the sleeve (70) has apertures (72) facing the passages (30), the apertures (72) being offset circumferentially along a longitudinal direction of the sleeve (70).

14. A filtering unit (90) comprising a plurality of filtering components (10) as claimed in any one of claims 1 to 5, or a plurality of filtering elements (11) as claimed in any one of claims 6 to 9, or a plurality of filtering parts (10, 11) as claimed in claims 9 to 12, or a filtering assembly as claimed in claim 12 or 13, wherein the filtering unit further comprises a rotary backwashing distributor (80) configured to selectively isolate the passages (30) to enable backwashing in the corresponding sectors.

## Patentansprüche

1. Filterelement (10) für eine Filtereinheit (90) mit Rückspülung, wobei das Filterelement (10) ringförmig ist und eine Innenkante (24), eine Außenkante (26) und ein sich zwischen der Innenkante (24) und der Außenkante (26) erstreckendes Filtermittel (22) umfasst, wobei das Filterelement (10) auf beiden Seiten des Filtermittels (22) eine Innenfläche (20) und eine Außenfläche (21) aufweist, wobei sich auf der Innenfläche (20) zwischen der Innenkante (24) und der Außenkante (26) erstreckende Rippen (28) umfangsverteilt sind, um Sektoren zu bilden, **dadurch gekennzeichnet, dass** das Filterelement (10) ausgelegt ist, gegen ein erstes identisches Filterelement (10') montiert zu werden, sodass ihre einander zugewandten jeweiligen Innenflächen (20, 20') einen Raum definieren, der durch die in Kontakt stehenden jeweiligen Rippen (28, 28') der Innenflächen umfangsseitig unterteilt ist, wobei die Innenkante (24) oder die Außenkante (26) Durchgänge (30) aufweist, die mit jedem der Sektoren auf der Innenfläche (20) in Verbindung stehen, und wobei die Außenfläche (21) einen Schlüssel (36) zum Koppeln des Filterelements (10) in einer vorgegebenen Position relativ zu einem zweiten identischen Filterelement (10") aufweist, wobei der Schlüssel (36) so angeordnet ist, dass die Durchgänge (30") des zweiten identischen Filterelements (10") gegenüber den Durchgängen (30) des Filterelements (10) versetzt sind.

2. Filterelement nach Anspruch 1, wobei der Schlüssel (36) dazu konfiguriert ist, ein Montieren der Außenfläche (21) an der Innenfläche (20") des zweiten identischen Filterelements (10") zu verhindern.

3. Filterelement nach Anspruch 1 oder 2, wobei die Innenfläche (20) einen ersten Indikator (34) und einen zweiten Indikator (35) zum Koppeln mit einem entsprechenden zweiten Indikator (35') bzw. einem entsprechenden ersten Indikator (34') der Innenfläche (20') des ersten identischen Filterelements (10') umfasst, und wobei der Schlüssel (36) gegenüber einer Symmetrieachse (Y), die den ersten Indikator (34) in den zweiten Indikator (35) transformiert, versetzt ist.

4. Filterelement nach einem der Ansprüche 1 bis 3, wobei sich die Rippen (28) über das Filtermittel (22) hinaus bis zur Außenfläche (21) erstrecken, wobei eine Dicke der Rippen (28) auf der Außenfläche (21) geringer ist als eine Dicke der Rippen (28) auf der Innenfläche (20).

5. Filterelement nach einem der Ansprüche 1 bis 4, wobei der Schlüssel (36) in einer Richtung quer zu dem Filtermittel zumindest einer der Rippen (28, 29) zugewandt ist.

6. Filterelement (11) für eine Filtereinheit (90) mit Rückspülung, wobei das Filterelement (11) aus einem Filterelement (10) und einem identischen Filterelement (10') nach einem der Ansprüche 1 bis 5 besteht, wobei das Filterelement (11) ringförmig ist und eine Innenkante (24, 24'), eine Außenkante (26, 26') und ein sich zwischen der Innenkante (24, 24') und der Außenkante (26, 26') erstreckendes Filtermittel (22, 22') umfasst, um eine Vorfilterkammer zu definieren, **dadurch gekennzeichnet, dass** zumindest die Vorfilterkammer umfangsseitig in Sektoren unterteilt ist, zumindest eine von der Innenkante (24, 24') und der Außenkante (26, 26') Durchgänge (30) aufweist, die mit jedem der Sektoren in Verbindung stehen, wobei das Filterelement (11) weiter einen Schlüssel (36) zum Koppeln des Filterelements (11) in einer vorgegebenen Position relativ zu einem identischen Filterelement (11') aufweist, wobei der Schlüssel (36) so angeordnet ist, dass die Durchgänge (30') des identischen Filterelements (11') gegenüber den Durchgängen (30") des Filterelements (11") versetzt sind.

7. Filterelement nach Anspruch 6, wobei der Schlüssel (36) außerhalb der Vorfilterkammer angeordnet ist.

8. Filterelement nach Anspruch 6 oder 7, wobei der Schlüssel (36) an zwei gegenüberliegenden Seiten des Filterelements (11) an unterschiedlichen Positionen bereitgestellt ist.

9. Filterteil für eine Filtereinheit mit Rückspülung, wobei das Filterteil das Filterelement (10) nach einem der Ansprüche 1 bis 5 oder das Filterelement (11) nach einem der Ansprüche 6 bis 9 ist.

10. Filterteil nach Anspruch 9, wobei der Schlüssel (36) einen Vorsprung (37) und eine Aussparung (38) umfasst, wobei der Vorsprung (37) konfiguriert ist, in die Aussparung (38") eines identischen Filterteils einzugreifen.

11. Filterteil nach Anspruch 9 oder 10, wobei der Versatz ein Versatz ist, der kein ganzzahliges Vielfaches eines Sektors ist.

12. Filterteil nach einem der Ansprüche 9 bis 11, wobei der Schlüssel (36) bewirkt, dass das Filterteil nicht rotationssymmetrisch ist.

13. Filterbaugruppe für eine Filtereinheit mit Rückspülung, umfassend einen Mantel (70) und eine Vielzahl von Filterteilen (10, 11) nach einem der Ansprüche 9 bis 12, die miteinander gestapelt sind, wobei jedes Filterteil (10, 11) ein Filtermittel (22) und eine Vielzahl von Durchgängen (30) zum Leiten von Fluid zu dem Filtermittel (22) aufweist, wobei die Durchgänge (30) in unterteilten Sektoren ausmünden, wobei die Filterteile (10, 11) in Bezug auf den Mantel (70) gekoppelt sind, sodass die Durchgänge (30) eines der Filterteile gegenüber den Durchgängen (30) eines benachbarten der Filterteile versetzt sind, **dadurch gekennzeichnet, dass** der Mantel (70) Öffnungen (72) aufweist, die den Durchgängen (30) zugewandt sind, wobei die Öffnungen (72) entlang einer Längsrichtung des Mantels (70) umfangsversetzt sind.

14. Filtereinheit (90), umfassend eine Vielzahl von Filterelementen (10) nach einem der Ansprüche 1 bis 5, oder eine Vielzahl von Filterelementen (11) nach einem der Ansprüche 6 bis 9, oder eine Vielzahl von Filterteilen (10, 11) nach einem der Ansprüche 9 bis 12, oder eine Filterbaugruppe nach Anspruch 12 oder 13, wobei die Filtereinheit ferner einen drehbaren Rückspülverteiler (80) aufweist, der dazu konfiguriert ist, die Durchgänge (30) selektiv zu isolieren, um eine Rückspülung in den entsprechenden Sektoren zu ermöglichen.

## Revendications

1. Composant filtrant (10) pour une unité de filtration (90) avec rétrolavage, le composant filtrant (10) étant annulaire et comprenant un bord intérieur (24), un bord extérieur (26) et un milieu filtrant (22) s'étendant entre le bord intérieur (24) et le bord extérieur (26), le composant filtrant (10) présentant une face interne (20) et une face externe (21) de part et d'autre du milieu filtrant (22), dans lequel, sur la face interne (20), des nervures (28) s'étendant entre le bord intérieur (24) et le bord extérieur (26) sont réparties circonférentiellement pour former des secteurs, **caractérisé en ce que** le composant filtrant (10) est adapté pour être assemblé contre un premier composant filtrant identique (10') de sorte que leurs faces internes respectives (20, 20') se faisant face définissent un espace qui est compartimenté circonférentiellement par les nervures (28, 28') respectives étant en contact desdites faces internes, dans lequel un premier du bord intérieur (24) et du bord extérieur (26) présente des passages (30) communiquant avec chacun des secteurs de la face interne (20), et dans lequel la face externe (21) présente une clavette (36) pour apparier le composant filtrant (10) dans une position donnée par rapport à un second composant filtrant identique (10"), la clavette (36) étant agencée de telle sorte que les passages (30") du second composant filtrant identique (10") soient décalés par rapport aux passages (30) du composant filtrant (10).

2. Composant filtrant selon la revendication 1, dans lequel la clavette (36) est configurée pour empêcher l'assemblage de la face externe (21) à la face interne (20") du second composant filtrant identique (10").

3. Composant filtrant selon la revendication 1 ou 2, dans lequel la face interne (20) comprend un premier indicateur (34) et un second indicateur (35) destinés à être appariés respectivement avec un second indicateur correspondant (35') et un premier indicateur correspondant (34') de la face interne (20') du premier composant filtrant identique (10'), et dans lequel la clavette (36) est décalée par rapport à un axe de symétrie (Y) qui transforme le premier indicateur (34) en le second indicateur (35).

4. Composant filtrant selon l'une quelconque des revendications 1 à 3, dans lequel les nervures (28) s'étendent au-delà du milieu filtrant (22) jusqu'à la face externe (21), une épaisseur des nervures (28) sur la face externe (21) étant inférieure à une épaisseur des nervures (28) sur la face interne (20).

5. Composant filtrant selon l'une quelconque des revendications 1 à 4, dans lequel la clavette (36) fait face à au moins une des nervures (28, 29) dans une direction transversale au milieu filtrant.

6. Élément filtrant (11) pour une unité de filtration (90) avec rétrolavage, l'élément filtrant (11) consistant en un composant filtrant (10) et un composant filtrant identique (10') selon l'une quelconque des revendications 1 à 5, dans lequel l'élément filtrant (11) est annulaire et comprend un bord intérieur (24, 24'), un bord extérieur (26, 26') et un milieu filtrant (22, 22') s'étendant entre le bord intérieur (24, 24') et le bord extérieur (26, 26') pour définir une chambre de préfiltration, **caractérisé en ce qu'**au moins la chambre de préfiltration est compartimentée circonférentiellement en secteurs, au moins un du bord intérieur (24, 24') et du bord extérieur (26, 26') présente des passages (30) communiquant avec chacun des secteurs, dans lequel l'élément filtrant (11) présente en outre une clavette (36) permettant l'appariement de l'élément filtrant (11) dans une position donnée par rapport à un élément filtrant identique (11'), la clavette (36) étant agencée de telle sorte que les passages (30) de l'élément filtrant identique soient décalés par rapport aux passages (30") de l'élément filtrant (11').

7. Élément filtrant selon la revendication 6, dans lequel la clavette (36) est à l'extérieur de la chambre de préfiltration.

8. Élément filtrant selon la revendication 6 ou 7, dans lequel la clavette (36) est prévue sur deux côtés opposés de l'élément filtrant (11), à des positions différentes sur les deux côtés opposés.

9. Partie filtrante pour une unité de filtration avec rétrolavage, dans laquelle la partie filtrante est le composant filtrant (10) selon l'une quelconque des revendications 1 à 5 et 8 ou l'élément filtrant (11') selon l'une quelconque des revendications 6 à 8.

10. Partie filtrante selon la revendication 9, dans laquelle la clavette (36) comprend une protubérance (37) et un évidement (38), dans laquelle la protubérance (37) est configurée pour s'engager dans l'évidement (38") d'une partie filtrante identique.

11. Partie de filtration selon la revendication 9 ou 10, dans laquelle le décalage est un décalage par un multiple non entier d'un secteur.

12. Partie filtrante selon l'une quelconque des revendications 9 à 11, dans laquelle la clavette (36) rend la partie filtrante non symétrique en rotation.

13. Ensemble de filtration pour une unité de filtration avec rétrolavage, comprenant un manchon (70) et une pluralité de parties filtrantes (10, 11) selon l'une quelconque des revendications 9 à 12 et qui sont empilées les unes sur les autres, dans lequel chaque partie filtrante (10, 11) présente un milieu filtrant (22) et une pluralité de passages (30) pour conduire un fluide vers le milieu filtrant (22), les passages (30) s'ouvrant sur des secteurs compartimentés, dans lequel les parties filtrantes (10, 11) sont clavetées par rapport au manchon (70) de sorte que les passages (30) de l'une des parties filtrantes soient décalés par rapport aux passages (30) de l'une adjacente des parties filtrantes, **caractérisé en ce que** le manchon (70) présente des ouvertures (72) faisant face aux passages (30), les ouvertures (72) étant décalées circonférentiellement le long d'une direction longitudinale du manchon (70).

14. Unité de filtration (90) comprenant une pluralité de composants filtrants (10) selon l'une quelconque des revendications 1 à 5, ou une pluralité d'éléments filtrants (11) selon l'une quelconque des revendications 6 à 9, ou une pluralité de parties filtrantes (10, 11) selon les revendications 9 à 12, ou un ensemble de filtration selon la revendication 12 ou 13, dans laquelle l'unité de filtration comprend en outre un distributeur de rétrolavage rotatif (80) configuré pour isoler sélectivement les passages (30) afin de permettre le rétrolavage dans les secteurs correspondants.
